# EUROPEAN PATENT APPLICATION

(11) **EP 1 420 575 A1**
(43) Date of publication of application: **19.05.2004**
(21) Application number: 03025078.1
(22) Date of filing: 03.11.2003
(51) Int. Cl.: H04N 1/41

(54) **Run length compression format for storing raster data in a cache**

(30) Priority: 12.11.2002 US 425678 P
(71) Applicant: NexPress Solutions LLC, Rochester, NY 14653-7103 (US)
(72) Inventor: Albers, Walter R., Webster, New York 14580 (US); Donahue, Timothy F., Mendon, NY 14506 (US); Henderson, Thomas A., Rochester, NY 14625 (US)
(74) Representative: Franzen, Peter

(57) **Abstract**

A run length compression technique, that raster image processes page elements into a plurality of groups of raster data and analyzes the groups of raster data for a predetermined set of parameters. An assignment of compression states is made in accordance with results of the analysis for characteristics of transparency, constancy of a value for the groups of raster data, or features within the groups that should not be compressed.

## Description

### FIELD OF THE INVENTION

The present invention relates to compression techniques, and more particularly, to compressing raster page content data so that it is optimized for storage and retrieval from a cache.

### BACKGROUND OF THE INVENTION

Variable Data Printing (VDP) is a form of printing that produces individualized printed pieces, each of which contain printed pages containing information targeted to an individual recipient. VDP authoring combines the graphical arts practice of graphical page authoring with Information Technology (IT) to provide a utility to create variable data print jobs that will be input to one or more print production processes in which the printed and finished pieces are manufactured. The various variable content instance documents comprising a VDP job are authored based on data drawn from a database containing records of information that characterizes the individual recipients.

A common problem that exists for VDP is that it will typically take longer for a Raster Image Processor (RIP) to rasterize and print than a conventional print job using non-variable data. Variable print data is sent to a RIP where code for text elements and graphic elements are processed into a raster data format that can be utilized by the marking engine of a digital printer. Therefore, for every page having variable data, the RIP must repeatedly create each code element that is common among document instances. This creates a substantial processing bottleneck compared to RIPping print jobs comprised of multiple copies of a single document, which need only be RIPped once.

Accordingly, there is an ongoing desire within the graphic arts industry to correct the previously discussed shortcomings within the prior art and to enable faster processing for VDP. It is also desirable to use currently practiced methodology within the print engine. The graphic arts industry benefits from a method that can provide an efficient and reliable exchange of variable data for use in variable data print jobs.

A page definition mark up language, called Personalized Print Markup Language (PPML), developed by the Print On Demand Initiative (PODi) is an example of a data format that can represent the layout of the pages of the many unique instance documents of a variable data print job. PPML is based on the Extensible Markup Language (XML) and is structured in such a way that content data that is used multiple times under the same rendering context on one or more pages is explicitly identified to provide a consuming RIP process opportunity for improved processing performance. Ideally, a PPML RIP would process all content elements a single time, including both the identified reused and non-reused content elements, where the re-used elements are stored in a cache after they are first RIPped and then reused as raster data.

Allowing a printer RIP to store and re-use rasterized graphic elements as needed provides a tremendous improvement in processing performance. The ability to re-use these elements also eliminates the need to resend the source code that defines the content element to the printer/RIP multiple times during the same print job. PPML is a significant advancement for Variable Data Printing because it allows a printer/RIP to understand at an object level rather than a page level. It allows a printer/RIP to have a certain degree of intelligence and manipulate the components (objects) that make up a page. It also provides code developers the ability to name objects, which permits the re-use of the objects as needed during printing of a variable data job.

Variable Data Exchange (VDX) is a standard that has recently been evolving within the Committee for Graphic Arts Technologies Standards (CGATS), as a production tool for variable data in the form of a VDX instance combined with PPML. A VDX instance is a compilation of records that define the content and layout of many composite pages. VDX instances are defined with PPML to create the composite definitions of PPML/VDX instance documents. Each composite page of a PPML/VDX instance document is an assembly of one or more partial pages or content objects referred to as compound elements. PPML/VDX allows compound elements to be defined once and referenced many times from the various composite page layout instances to effectively reduce the overall size of data for a PPML/VDX instance.

The layout data that describes the composite pages of a PPML/VDX instance is defined using a subset of the previously described PPML. The data format required by the PPML/VDX standard for defining the compound element source data is the Adobe® Portable Document Format (PDF) defined and maintained by Adobe® Systems. In PPML/VDX, the source page description language (PDL) data that defines a compound element that is placed on a PPML defined page layout is always expressed as a page of a PDF file. PDF files used to define PPML/VDX compound elements must contain all the supporting resources such as fonts, image data, and color profiles. PDF files used to define PPML/VDX compound elements must also define all color content in a known reference device or device independent color-space.

VDX requires that the PPML layout data of a VDX instance be stored as a single, randomly accessible PDF object stream that is stored within a PDF file. Depending upon the conformance level, the PDF file embedding the PPML data may also contain some, or possibly all, of the PDF page object definitions required by the VDX instance that results in a PPML layout data object. The PPML/VDX file has an XML element containing the PPML and product intent data that is referred to as the PPML/VDX Layout file. PDF files that contain only PDF page objects used only for defining compound element definitions and have no XML elements stored within them and may be referenced from the PPML data store in a PPML/VDX Layout file, these PDF files are referred to as a PPML/VDX Content File.

A completely specified device and production workflow independent VDP job definition is comprised of 3 basic components, 2 of which define the appearance of the variable page content, namely layout (also referred to as mark-up) data, and content data. In a PPML/VDX instance, the layout component is defined by the PPML data, and the content component is defined by the PDF data. The third component, known as product intent data, provides the description of the finished product. The product intent data typically includes information such as document binding styles, single and/or 2 sided print options, substrate types, and other attributes of a print product description required for communicating to a print service provider the definition of the final print products that are to be manufactured. Product intent information does not define the controls of a particular target manufacturing process or device because such information is usually not known to the PPML/VDX authoring agent. These device control parameters are usually only known to the print provider who receives the exchanged VDP job data. The print provider, therefore, must derive the manufacturing specifications specific to their production workflow or workflows from the product intent, layout, and content data specification created by their customer.

A PPML/VDX instance is created by a data driven merge process referred to as a variable data merge engine. The merge engine typically executes within an authoring environment for variable data. The authoring environment can be located at a different location from the graphic arts establishment that actually prints the final pages of the variable data documents. In some scenarios, a PPML/VDX instance may be sub-divided into several PPML/VDX instances that can be transferred to different locations to be printed. Generation of a PPML/VDX instance by the variable data merge engine is considered a final activity in the somewhat complex process for authoring variable data. The PPML/VDX instance can be transferred to a print production workflow within the same or different operating environment where it can be viewed by a prepress operator, and placed into a final production ready form that is suitable for the digital printer used at that location.

A variable data print job is a collection of documents where each document typically has a unique intended recipient. In a VDP job, many of the graphical elements will differ in each document, typically reflecting the identity of the recipient. However, most of the elements will be common across the set of documents in a VDP job. Such content elements are known within the art of VDP as *recurring* content elements.

The data formats that are designed for representing VDP jobs are capable of defining multiple documents, where each document can contain virtually any number of pages. These data formats, such as the Personalized Print Markup Language (PPML), are structured in such a way that recurring content elements are explicitly identified. In such data formats, common PDL formats such as Adobe® PostScript® or Adobe® PDF are typically used to encode the content element data that is to be sent to a raster image processor (RIP). The content elements are referenced from the page layout portion of the PPML file and then raster image processed (RIPped).

It is well known that creating a raster from a page description can consume a great deal of computer processing time. Accordingly, a common approach for improving the rendering efficiency of a VDP job is to avoid redundant RIPping of recurring objects. This can be accomplished by raster image processing (RIPping) the recurring content elements only once. To obviate having to RIP the recurring elements from scratch each time they appear on a page, it is desirable to store the rasterized elements and read them from storage to place them on the page. In order to RIP recurring compound elements only once, the rasterized elements need to be stored, typically in an intermediate memory known as a *raster cache*. Cached raster elements are reused by merging them into the raster page image. Since it is possible that some pixels of the cached elements are intended to be transparent with respect to the corresponding pixels of the raster page, it is required that the RIP generates a mask record identifying the pixels that are transparent when content elements are rasterized.

From the foregoing discussion, it should be readily apparent that there remains a need in the art for efficient compression techniques for raster based data that will be cached.

### SUMMARY OF THE INVENTION

The present invention addresses the shortcomings within the prior art by providing a method and apparatus for compressing raster data into a cache of reusable object rasters. The invention categorizes various raster representations based on an analysis of the raster data values. The categorization results in assignment of blocks of raster data to one of a plurality of states. The state selected can result in one of several representations of the raster data. The state can result in compression or no compression of the raster data, depending upon the representation. The representation can include a run length encoding of constant raster value, a 4 to 1 sub-sample of raster values or a single copy of raster values.

The compression algorithm consumes raster data in pairs of scan lines, with each scan line having an associated transparency mask record (TMR). The TMR contains a single bit for each pixel in the raster data. If the pixel is transparent, the bit will remain unasserted (0), and if the pixel has been marked and is therefore opaque, the bit will be asserted (1).

The compression algorithm produces a series of states with associated run lengths, and associated data representations for the states by analyzing the input raster data. The states correspond to segments of the original image that are encoded according to the transparency of the raster data, the constancy of the raster data and the need to preserve image quality by retaining all of the raster data bytes. If the raster data is not at least partially transparent, have the constancy of raster data or contain image data that could be damaged by compression, then a sub-sample of the data bytes is made and stored for compression purposes.

### BRIEF DESCRIPTION OF THE DRAWINGS

FIG. 1 is an illustration of a digital printer for using the invention;
FIG. 2 is a block diagram of the functional portion of the digital printer;
FIG. 3 is a flow chart illustrating the generation of compression states utilized by the invention;
FIG. 4 is an illustration of a data structure employed by the invention;
FIG. 5 is an illustration of a data structure employed by the invention; and
FIG. 6 as an example of the compressed pixel data that is stored in the cache.

### DETAILED DESCRIPTION OF THE INVENTION

The present invention presents a description of the sequence of actions that a system performs upon a Variable Data Printing (VDP) job so that it can be efficiently produced. The preferred embodiment envisions a VDP prepress workflow component that provides a user-friendly utility to the prepress operator for facilitating the production of VDP jobs. A VDP job may consist of instance documents that differ significantly in terms of how they are to be produced. For example, instance documents may vary in terms of: page quantity; media type; the number of pages that exceed the area that can be imaged; page layout (one-sided versus 2 sided); page orientation (portrait versus landscape); number of copies, and finishing. The VDP prepress workflow component will provide the prepress operator with the ability to analyze and view the VDP job, and then set up the VDP job within the digital press environment using knowledge of the devices available in the environment such that the VDP job can be optimally produced.

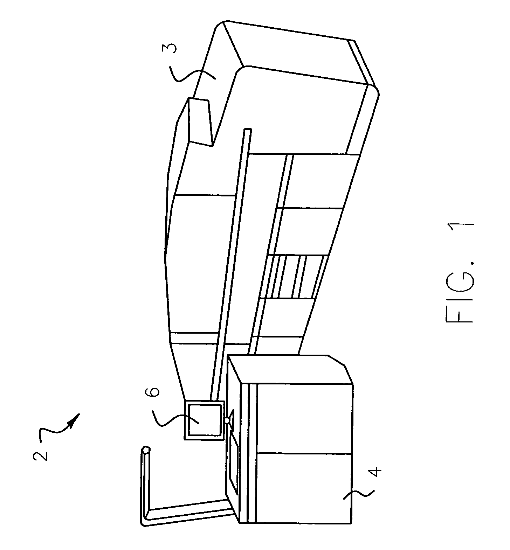

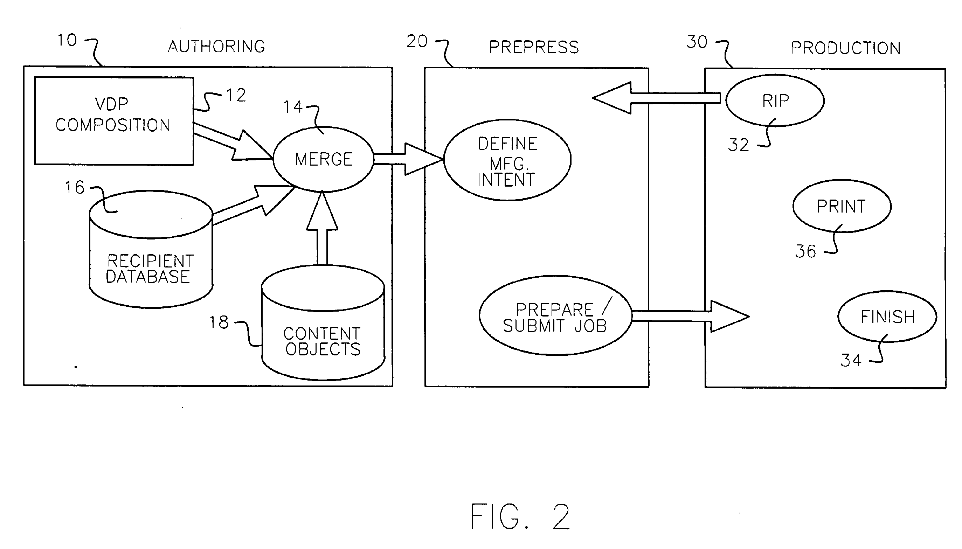

Referring to FIG. 2, a VDP job as envisioned by the present invention is accomplished in 3 basic areas. Authoring 10 provides the PPML/VDX file for the prepress 20 which in turn prepares the VDP job for production 30. FIG. 1 illustrates a NexPress™ 2100 digital printing system 2 with GUI 6 and NexStation® 4 providing input and control for printer 3.

Authoring 10 is typically performed by the graphic designer who creates the set of documents using a utility within VDP composition 12, to add variable content to traditional static designs produced by applications such as Quark® and InDesign®. Within the PPML/VDX standard, information known as product intent data may be included in PPML/VDX job data that describes information such as required media types, and binding styles. These product intent elements are encoded into a job ticket (such as PJTF or JDF). Each of these product intent characteristics are referenced from within the PPML data such that the instance document definitions defined in the PPML data are provided with a product intent definition. In this way the characteristics of the finished documents, such as binding style, media types, copy quantity, and number of pages that exceed the imaging area, which contribute to the definition of the finished print product are explicitly specified for any given document. The present invention will employ NexTreme™ as the tool for VDP Composition 12 within authoring 10. NexTreme™ is a proprietary authoring tool of NexPress Solutions, LLC, that generates the PPML/VDX document provided to prepress 20 and operates to create additional metadata in the form of extensions to the PPML/VDX variable data which is added by NexTreme™. These extensions can be items taken from the recipient database records such as the recipient's age, gender, postal address, or any other variable data that is specifically associated with the recipient. Authoring 10 will store these extensions as metadata within the PPML/VDX job 16. The prepress workflow application will later draw upon all of the product intent information including the metadata that is stored in the PPML/VDX job 16 as enunciated by the graphic artist using NexTreme™ to identify the optimal job ticket specification for printing the job.

The variable data, within the preferred embodiment, comes from data in recipient databases 16 that characterize the targeted audience. It is envisioned that the highly customized printed material which results from VDP will enable the printing industry the success being seen today in Internet one-to-one marketing. Merge 14 is a process wherein data from the recipient database 16 is combined with static content data that is contained in content objects 18 to produce the merged PPML/VDX instance document.

The preferred embodiment of the present invention is a VDP system that is a scaleable, end-to-end solution utilizing an open PDF based workflow architecture that recognizes the importance of, and supports, the decoupling of VDP authoring and VDP print production. The process of decoupling the VDP authoring from the VDP print production has necessitated the creation of VDP prepress workflow components as tools that can be used by the prepress operator during prepress 20 to optimally manufacture the VDP print job as described from the job producer. The VDP print job, which is received for processing during prepress 20 by the prepress operator, will contain anywhere from one to tens of thousands instance documents which lack any structure in terms of pages per document, number of copies per document, media, pages exceeding imaging area requirements, and finishing options. To enable the accurate and efficient manufacturing of the entire VDP job as specified by the PPML/VDX file, the prepress 20 component will provide a set of tools to analyze, view, and prepare the VDP job for the production 30. During production 30, the raster image processor (RIP) 32 will convert the code for each text and graphics element on every page into a format that can be printed by the print engine. After the VDP job has been RIPped, it printed 36 and finished 34.

A raster image is generally viewed as containing a fixed number of scan lines, where each of the scan lines are the same length containing a specific number of pixels that define the width of the raster image. For the preferred embodiment of this invention, the scan line length is constrained to be a multiple of 8 pixels.

In order to create a raster image from a set of content elements defining the appearance of the page as it is intended to look in its final form, it is necessary to raster image process (RIP) the page of content elements. To RIP recurring elements only once, it is necessary to store the rasterized elements in an intermediate memory store known as a *raster cache*. The rasterized elements to be reused are transported from the raster cache memory and merged directly into the raster page image. Since it is possible that some pixels of the rasterized elements are intended to be transparent with respect to the corresponding pixels of the raster page, it is necessary for the RIP to generate a *bit mask record* when content elements are rasterized. The binary, bit mask record is a rectangular array of binary bits identifying the visible, or marked pixels, of the rasterized content element. If a bit of the mask record is asserted, it means that the corresponding pixel of the RIPped raster data is considered visible and a previous pixel value of the raster page will be overwritten when it is merged into the raster page. If a bit in the mask record is not asserted, then that pixel of the RIPped content element data (that corresponds to the bit in the mask record) is considered transparent and the corresponding pixel on the raster page will not be replaced.

For maximum efficiency, the raster cache memory must be large enough to accommodate all rasterized recurring content elements of a given job. However, jobs often contain an unpredictable and possibly large number of recurring content elements. The limited capacity of a fixed size raster cache memory can be exceeded forcing some of the rasterized recurring content elements to be removed from the raster cache. If a recurring content element is removed, that same recurring content element will have to be RIPped again the next time it is used on a page.

To maximize the number of rasterized elements that can fit into a fixed size raster cache, a common technique is to first compress the content element raster data and corresponding bit mask record, and store the result in the raster cache. Like RIPping, the process of compressing and decompressing raster data also contributes to processing overhead. It is important, therefore, that the compression method can substantially reduce the size of the cached raster and, the decompression method, which is executed each time a raster is transported from the cache and merged into the raster page, using a minimum of processor time.

This invention provides a Run Length Encoding (RLE) scheme for raster data compression that differs from conventional RLE compression schemes by implicitly including the raster mask record within its encoding. The invention also uses the mask record as a means of improving the efficiency of the decompression processing that occurs during transport and merging of the data into the raster page.

### Processing Steps:

A *non-recurring* content element that is encountered by the Page Definition Language (PDL) parser in the PDL layout data is processed by the RIP and rendered directly into the final raster page.

A *recurring* content element encountered for the first time by the PDL parser is RIPped and the resulting rasterized element along with its respective mask record is compressed and stored in the raster cache memory. To complete the page, the RIPped content element is decompressed from the cache and directly merged into the composite raster page at a location specified in the PDL data. Once the PDL parser encounters a reference to a recurring content element a subsequent time, it first checks the raster cache to see if an equivalent, previously RIPped version of the content element is present, and if it is, the RIPped content element is again decompressed directly into the final composite raster page at a location specified in the PDL data. If a previously RIPped content element is not present in the raster cache because it has been previously removed, the element is re-RIPped. The resulting raster data with the corresponding mask record are compressed, stored in the cache memory, and the RIPped content element is decompressed as before, and visible pixels are merged into the composite raster page at a location specified in the PDL data.

The bit mask record data generated during the rasterization process is used by the compression method in a manner that minimizes the number of processor instructions required to determine the desired run length encoding, resulting in an improvement in execution performance. This occurs by testing the bit mask record a byte at a time. One comparison serves to categorize 8 pixels of raster data as belonging to one of several states. Most clearly, if a byte of the bit mask record is zero, there are 8 consecutive transparent pixels. Likewise, if the value is 255, then the 8 pixels are marked pixels in the cached raster. If the byte of the mask record has any other values, the corresponding raster pixels contain a mixture of transparent and marked pixels. In this manner 8 pixels can be initially categorized based on the value of a single mask byte.

The invention compresses data for storage in a raster cache memory by defining 6 states for the rasterized data and mask record. As previously stated, the mask record is a series of data bytes. Each byte identifies the state for 8 corresponding pixels as being either visible or transparent. Each bit within the mask record represents the transparency status of a single pixel. That pixel will be transparent if represented by a binary "0" or visible if represented by a binary "1". The compression technique is preferably performed by scanning 2 adjacent lines and 8 pixel groups from each of the scan lines at the same time. Typically, the scanning process proceeds from the upper left to the lower right. To define the 6 compression states, the mask records of the 2 scan lines are analyzed together. The analysis is preferably performed on contiguous 8 pixel segments. It will be readily apparent to those skilled in the art that other states cap be derived from the rasterized data and the mask record. Accordingly, it should be understood that the 6 states defined herein are representative of the preferred embodiment of the invention.

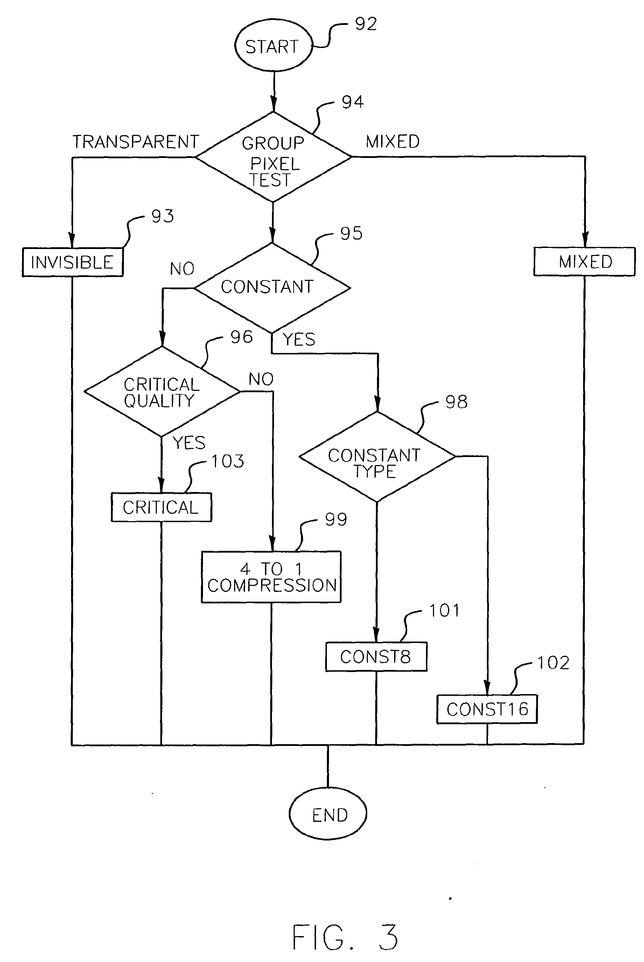

The preferred embodiment envisions parsing rasterized images into 8 pixel groups on each of 2 scan lines. The analysis of the 8 pixel groups in each of the 2 scan lines is illustrated in the flow chart for Compression Analysis 90 shown in FIG. 3. The compression analysis is performed on each group of 16 pixels from adjacent scan lines beginning at Start 92. The contiguous groups of pixels are analyzed as a single group by Group Pixel Test 94 to determine if the pixels are either all transparent, all visible or a combination of transparent and visible pixels. If all of the pixels being analyzed are not visible, then Invisible 93 assigns the state of ALLTransparent to this group of pixels. In order to make the determination that the pixels currently being tested should be assigned the state of ALLTransparent, the 2 bytes of the current mask record for each scan line must be zero. Once Invisible 93 has assigned the state of ALLTransparent, the 8 pixels in the cached raster become place holders within each of the 2 scan lines for those pixels that were examined and assigned the state of ALLTransparent. No source pixels are stored. The run length as used herein is defined as the number of times a state repeats. Therefore, a state can have a run length as small as one or it could be as large as one-eighth the total number of pixels within a scan line. The compression scheme for the state of ALLTransparent uses the run length as a displacement in the destination page raster scan line until the next state begins or the scan line ends.

If the result of Group Pixel Test 94 determines that some of the pixels being analyzed are visible and other pixels are transparent, then Mixed 91 assigns the state of MixedVisibleTransparent to the current group of contiguous pixels. MixedVisibleTransparent is a condition that is likely to occur at a transition between a marked area and an unmarked area. Such a transition can occur on an 8 byte boundary, although that transition does not produce a MixedVisibleTransparent state. Mixed 91, does not compress the MixedVisibleTransparent data at all, but instead copies the data, including the mask record, directly into the cache.

If Group Pixel Test 94 determines that all the pixels currently being analyzed are visible then these pixels will be assigned to one of Critical 83, 4 to 1 Compression 99, Const8 101 or Const16 102. Constant 95 checks the values for the two 64 bit words that represent each of the 8 pixel groups in the 2 scan lines. The objective is to compare the current 16 pixels to the previous group of 16 pixels for a match. If the 8 pixel groups for each of the scan lines matches that of the previous 8 pixels for that scan line, then Constant 95 returns an affirmative result indicating that there is a constant state.

Constant Type 98 is invoked by an affirmative result returned by Constant 95. In the preferred embodiment, Constant Type 98 will assign one of 2 states. The 2 scan lines have the 8 pixel groups examined as 64 bit words. If the 64 bit words being examined in each scan line are not equal to each other, but each equal to the previous 64 bit word for that scan line, then Constant Type 98 will assign the state of AllVisibleConstant16. AllVisibleConstant16 implies that the 64 bit words on one scan line are equal to the previous 64 bit word, but the 64 bit word for one scan line is not equal to the 64 bit word for the other scan line. The designation of AllVisibleConstant16 requires that corresponding portions for each of the scan lines being examined be of constant value, and must be stored to the representative state.

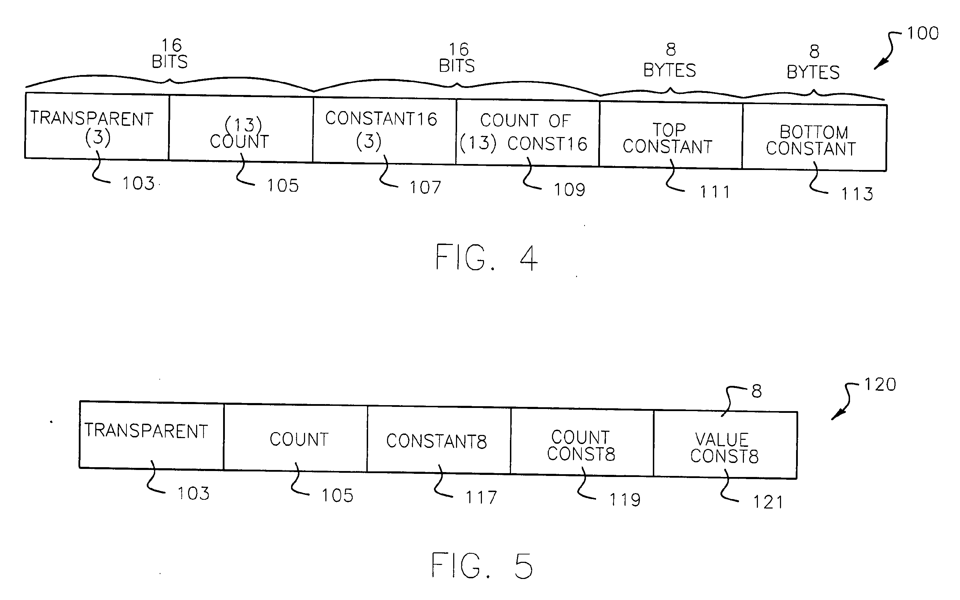

FIG. 4 is an illustrative example of a Data Structure 100 that can conceivably result from the above discussed analysis of FIG. 3. Transparent 103 identifies the state of ALLTransparent within the scan line and Count 105 identifies the run length for the pixels that are transparent within Data Structure 100. For example, assume that Count 105 contains a run length of 13, then the resulting compressed run length represents 208 (13 x 16) transparent pixels for the present scan line pair. Constant 16 107 of Data Structure 100 identifies the next group of pixels within the scan line as being in the state of AllVisibleConstant16. The count of Const16 109 gives the number of 16 byte blocks that repeat as AllVisibleConstant16, in the present example this is the run length of 5 yielding 30 (5 x 16) pixels. Top Constant 111 and Bottom Constant 113 are each 8 bytes long and provide the 2 constant values that repeat. It should be readily apparent that the Data Structure 100 is organized around 8 byte boundaries. Other data structures will be readily apparent to those skilled in the art. The preferred embodiment employs 8 byte boundaries intentionally because of the memory architecture of commonly available computers.

FIG. 5 illustrates another example of the Data Structure 120 that can result from the procedural analysis of FIG. 3. Again, for the purpose of illustration, Transparent 103 identifies the state of ALLTransparent within the analyzed groups of the scan lines and Count 105 identifies the run length for the pixels that are transparent before those pixels within the scan lines being examined for the state of AllVisibleConstant8. AllVisibleConstant8 corresponds to the state wherein the 64 bit words for the 8 pixels currently being analyzed on both scan lines are equal to the 64 bit words for the 8 pixels previously analyzed, and the corresponding 64 bit numerical values for the 8 pixels in both scan lines are also equal. Constant8 117 identifies the state of AllVisibleConstant8 and Count Const8 119 to record the run length of the raster pixels within that state. Again, the count will be incremented for each consecutive block of pixels that has the state of AllVisibleConstant8. Value Const8 121 is the numerical value of the 64 bit binary word that is created by the 8 cached raster pixels that are currently being examined in each row. In contrasting AllVisibleConstant8 with AllVisibleConstant16, AllVisibleConstant8 requires four 64 bit words to be equal, 2 from the first scan line and 2 from the second scan line. AllVisibleConstant8 requires that the compressed data structure only retain this 64 bit word a single time in ValueConst8 121 and the number of times the state of AllVisibleConstant8 repeats itself is a run length that is retained in Count 105. The designation of AllVisibleConstant16 only requires that 64 bit words be equal on the same scan line and that this situation exists on both scans lines. The resulting compression from the state of AllVisibleConstant16 requires 8 more bytes to store both Top Constant 111 and Bottom Constant 113.

If Constant 95 indicates that the value of either of the 64 bit words in the scan lines being analyzed is not the same as the previous 64 bit word in that scan line, then either the state of AllVisibleNotConstant or AllVisibleCompressed will be assigned to the current pixel group. The 64 bit number created from the 8 bytes of pixel data currently being examined is not equal to the 64 bit number for the previous 8 bytes of pixel data. To determine if AllVisibleNotConstant data should be compressed, the pixel data is further analyzed to identify any features within the pixel data that could be lost due to compression. The concept of a feature that could be lost due to compression is referred to herein as a "critical feature".

Critical Quality 96 identifies the existence of critical features that could possibly be lost due to compression. If Critical Quality 96 returns an affirmative response, then Critical 83 is performed to assign a state that does not compress the pixel data. The critical features identified by Critical Quality 96 as not to be lost by compression include, but are not limited to lines, edges and features generated from drawing commands. The preferred embodiment envisions parsing rasterized images again into contiguous 8 pixel groups within adjacent scan lines, such that 8 pairs of adjacent pixels will be selected from the 2 scan lines to form a single 16 pixel group to be analyzed for critical features. The basic methodology performed by Critical Quality 96 is to search out maximum and minimum values within the sampled pixels. The largest pixel value is referred to herein as the Max_Value, the second largest value within the group of pixels is the Next_Max_Value. If the difference between the Max_Value and the Next_Max_Value exceeds a predetermined threshold, then the preferred embodiment determines that features exist within that group of pixels that could be destroyed by compressing the pixel data. In a similar manner, the smallest value is the Min_Value, the next smallest value is the Next_Min_Value, these 2 values are compared and if their difference in value exceeds a threshold, then it would also be determined that features exist that could be destroyed by compressing this group of pixel data. Accordingly, pixel data that is found to contain a critical feature is not compressed by the invention. Below is a sample of program design language of Critical Quality 96 that can be used to determine the existence of critical features.
Find Critical Quality;
Set Critical Quality = False;
Find Max_Value;
Find Next_Max_Value;
Compare Difference Between Max_Value and Next_Max_Value to Threshold;
If Difference exceeds Threshold, Then Critical Quality=True, Go to Done;
Else;
Find Min_Value;
Find Next_Min_Value;
Compare Difference Between Min_Value and Next_Min_Value to Threshold;
If Difference exceeds Threshold, Then Critical Quality=True; DONE.

It will be readily understood by those skilled in the art that numerous variations of the preferred embodiment are possible. The invention envisions that other methods can be employed to determine the existence of critical features within predetermined groupings of pixels. The invention envisions the possibility of using object identification information to identify the different object types and apply specific compressions based on the object type. Typically, image objects (those objects already existing in the form of a bit map) will have to be either resized or rotated so that it can be imposed in the desired manner. Objects other than image objects within PDF can include text characters, objects generated via graphical commands, and fonts. The graphical objects can be rendered using commands in a robust graphical drawing language such as PDF or PostScript®. The PDF section of the PPML/VDX file format helps the RIP to identify the source of the object that is being imposed. Additional identification data can be obtained during the RIPping of an object and retained for compression purposes. Data blocks can be examined to determine if it is desirable to preserve that data without change. If it is desirable to preserve the pixel data, then the data block can be viewed as containing a critical feature and viewed as a positive result to Critical Quality 96 and not be compressed.

If Critical Quality 96 returns a false result, then the state that is assigned will represent the pixels in compressed form. This state is referred to herein as AllVisibleCompressed. The state of AllVisibleCompressed is applied to pixel data identified as containing no critical features within the pixel data combined with the criteria for AllVisible8 and All Visible 16 not being satisfied. The mask record for AllVisibleCompressed data is 255, meaning all the pixels are visible. Data assigned as AllVisibleCompressed will be compressed by sampling an average of 4 pixels resulting in a 4 to 1 compression ratio. However, varying compression ratios and techniques could be employed. The AllVisibleCompressed state contains 4 bytes for each unit of run length. Conceivably, the run length in the state of AllVisibleCompressed could be as small as one unit, but in the preferred embodiment, the run length is constrained to be at least 2, preserving 8 byte boundaries.

The preferred embodiment employs an additional state referred to herein as the padding state. The padding state essentially resets the alignment between states, so that a new state can start on an 8 byte boundary within the compressed data stream. The desire to arrange data with 8 byte boundaries derives from the fact that processors typically have addressing modes that allow efficient transfer of data in 8 byte blocks. Therefore, a padding state is preferably employed that allows a more efficient transfer of data by insuring that the data is arranged in 8 byte blocks.

It should be noted that in the preferred embodiment a minimum of 4 segment descriptors are used to define a scan line. Furthermore, data that is to be stored in the cache is arranged in 4 segment parcels, with the data for the 4 segments following the 8 bytes that define the 4 segments. Following is an example of the data format employed by the preferred embodiment of the invention. The first 8 bytes, as shown below, define a sequence of 4 segment descriptors, wherein each one of these 4 segment descriptors can define any of the possible states, which in the preferred embodiment are AllTransparent, AllVisibleConstant8, AllVisibleConstant16, AllVisibleCompressed, AllVisibleNotConstant, or MixedVisibleTransparent. Four segment descriptors are grouped for purposes of maximizing the efficiency of processors wherein only a single 64 bit memory fetch can retrieve 4 segments.

The 4 segment descriptors (8 bytes defining the 4 segments) are followed by the data for those segment descriptors. The data stored in the cache depends on the states defined by the 8 bytes of segment descriptors as follows:
AllTransparent: no data required for this state;
AllVisibleConstant16: 8 pixels of the constant value for each scan line, results in 16 bytes of data;
AllVisible8: 8 pixels of constant value for both scan lines, resulting in 8 bytes of data;
AllVisibleCompressed: the data storage required is run length times 4 of the pixel data (run length of 16 byte blocks sub-sampled by 4);
AllVisibleNotConstant: the data storage required is run length*16 of pixel data (run length of 16 byte blocks); and
MixedVisibleTransparent: the data storage required is run length of 16 byte blocks for 2 scan lines, followed by run length of mask bytes. The run length of mask bytes is 1 bit for each pixel in the state, or 16 bits results in 2 bytes.

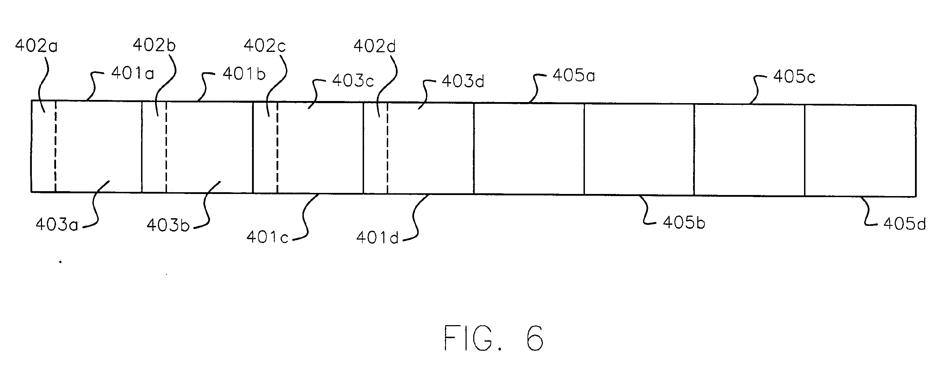

Referring to FIG. 6 as an example of the compressed pixel data that is stored in the cache, 4 segment descriptors 401a, b, c, d are contained in the first 8 bytes. The pixel data representation for the segment descriptors follows the 8 bytes defining the 4 segment descriptors 401a, b, c, d. Storage locations 405a, b, c, d contains the respective data for segment descriptors 401a, b, c, d. In the present example, segment descriptor 401a is defined by state identifier 402a as being the state of AllTransparent. The state identifiers 402a, b, c ,d within the preferred embodiment use 3 bits to identify one of 6 states. The run length of each state defined by state identifier 402a, b, c, d is given by the respective count 403a, b, c, d which consumes the remaining 13 bits of segment descriptors 401a, b, c, d. Thus with each increment of count 403a, b, c, d representing an additional 8 pixels in run length for each scan line, and 13 bits can represent up to 65,536 pixels in each scan line using the compression technique of the preferred embodiment. It should be understood that numerous variations of the data structures discussed herein will be readily apparent to those skilled in the art. In the present example, count 403a is 10, therefore the state of AllTransparent has a run length of 10, representing 80 consecutive transparent pixels. Storage location 405a is used to hold the data required for segment descriptor 401a, however, since state identifier 402a defines the state of AllTransparent, no data is required to be stored in storage location 405a, and zero bytes are required as data for the state of AllTransparent.

Still referring to FIG. 6, in this example assume that segment descriptor 401b is defined by state identifier 402b as being the state of AllVisibleConstant16 and count 403b defines a run length of 50, representing 400 pixels in each of the scan lines. Storage location 405b is required to store 16 bytes to define the Top Constant 111 and Bottom Constant 113, as previously discussed. Next, assume that segment descriptor 401c is defined by state identifier 402c as being the state of AllVisibleCompressed and count 403c defines a run length of 7, representing 7 blocks of 16 pixels (8 from each scan line) that are being compressed into 7 blocks of 4 pixels. Therefore, storage location 405c will consume 28 bytes. Finally, assume that segment descriptor 401d is defined by state identifier 402d as being the state of AllVisibleConstant8 and count 403d defines a run length of 50, representing 400 pixels in each of the scan lines. Storage location 405d is only required to store 8 bytes to define the ValueConst8 121, as previously discussed.

The result of FIG. 6, is that 1872 bytes of pixel data in the 2 scan lines currently being analyzed, is compressed into 60 bytes. Assuming that the scan lines are longer than 1872 pixels, another 4 segments will be defined with the necessary data until all the pixel data in the 2 scan lines is compressed. Then the next 2 scan lines will be analyzed and compressed.

The 4 segment descriptors are constrained to define at most a single *scan line* of a raster image. Accordingly, in the preferred embodiment, each scan line will be defined by at least 4 segment descriptors, although it should be understood that many more than 4 segment descriptors can be required to define the compressed data for a scan line depending on the pixel data. All 4 segment descriptor values are initially set to zero. Further explanation will be offered by the example below.

Suppose the 2 scan lines of raster image data are entirely transparent. The encoding would consist of just 8 bytes, 6 of which would remain zero. Those 8 bytes would then be output to the cache. At the start of the encoding of the next raster image scan line, a new group of 4 segment descriptors would then be encoded and output. No attempt is made to utilize the remaining 3 empty segment descriptors of the prior scan line.

In another example, both scan lines are made up entirely of visible pixels all with a value of zero. The scan lines would be converted into the 8 bytes of segment descriptor AllVisibleConstant8, 6 of which remain zero. Following the 8 bytes of segment descriptor, 8 bytes of constant value from the input image are output.

In another example, the scan lines are made up entirely of pictorial imagery, wherein none of the 8 byte pixel data groups are equal to any of the other previous 8 byte pixel data groups. These scan lines would be converted to the 8 bytes of segment descriptor indicative of AllVisibleCompressed, followed by the run length*4 bytes of image data.

A segment descriptor is defined as a state and run length that is encoded into 2 bytes where 3 of the bits are devoted to describing the state, and 13 of the bits are devoted to encoding the run length.

The cache raster data and the mask record are first encoded into a sequence of one or more segments. Each segment is comprised of a *state* with its *run length*, which defines the number of occurrences of the state, and the raster pixels that correspond to the state.

In addition to the storage reduction advantages, the encoded format facilitates an efficient copying of raster data from the cache to the rendered page. Since the status of a state is established initially at the beginning of a run length, the data for the mask record does not need to be repeatedly interpreted in all cases as data is being decompressed while a page is being composed. Only in the rarely occurring state of MixedVisibleTransparent, must the data for the mask record be consulted while composing the page. Additionally, because the states VisibleConstant8 and VisibleConstant16 store constant pixel values a single time in the encoded data, the time required to access (read) each raster byte is saved in the cases of VisibleConstant8 and VisibleConstant16.

The invention envisions the tracking of states within individual scanning operations. Within the preferred embodiment, a scanning operation involves scanning 2 scan lines per scanning operation. This concept of using 2 scan lines per scanning operation can be expanded to include more than 2 scan lines, and this will be readily apparent to those skilled in the relevant arts. The invention retains data related to the previous state, which is monitored while the present state is being categorized. During the analysis of the present state, a comparison with the monitored previous state is made in order to optimize compression, for example to insure that AllVisibleCompressed segments have even run lengths. Monitoring can lead to further optimization by identifying segments that can be redefined and combined, resulting in faster decompression.

The foregoing description details the most preferred embodiment known to the inventors, variations of the above disclosed embodiment will be readily apparent to those skilled in the relevant arts. Accordingly, the scope of the invention should be measured by the appended claims.

## Claims

1. A method of compressing a raster of pixel data and associated transparency mask data comprising the steps of:
dividing said raster of pixel data into a plurality of groups of pixels, such that each of said groups has an equal number of pixels and each of said pixels has a numerical value;
analyzing each of said groups for at least one of transparency, constancy of said numerical values within said group compared to another of said groups, and a feature within said group that should not be lost to compression;
assigning one of a plurality of states to each of said groups in response to the analyzing step; and
storing data indicative of said state for each of said groups in a memory.

2. The method of Claim 1, wherein the step of analyzing further comprises as said feature that should not be lost to compression, a particular distribution of said rasterized pixel values determined within each of said groups.

3. The method of Claim 1, wherein the step of analyzing further comprises determining said feature within said groups that should not be lost to compression based on lines, edges or graphically generated objects being at least partially contained within each of said groups.

4. The method of Claim 1, wherein the step of analyzing further comprises simultaneously analyzing said groups such that said raster pixel data within said groups are chosen from multiple scan lines.

5. The method of Claim 4, wherein the step of assigning further comprises determining said states in accordance with constancy of said rasterized pixels.

6. The method of Claim 1, wherein the step of assigning further comprises comparing said numerical value for each of said groups with said adjacent group to determine a run length of said state.

7. The method of Claim 6, wherein the step of assigning further comprises said run length being determined by a number of successive equalities of said numerical values of each of said groups and said adjacent groups.

8. The method of Claim 7, wherein the step of assigning further comprises determining said series of said numerical values being equal on individual scan lines.

9. The method of Claim 7, wherein the step of assigning further comprises determining said series of said numerical values being equal occurs on multiple scan lines.

10. The method of Claim 1, wherein the step of assigning further comprises at least one of said states having data that is a lossy compression of the original pixel values.

11. A system for compressing raster pixel data comprising:
a raster image processor capable of converting a plurality of page description elements into a plurality of groups of raster data;
a computational element coupled to a memory;
an analysis mechanism coupled to said computational element, said analysis mechanism applying a predetermined set of parameters to identify features within said groups of raster data;
an assignment routine coupled to said computational element that places each of said groups of raster data into one of a plurality of states responsive to identification of said set of parameters by said analysis mechanism, said states further including at least one state that does not compress said raster data and a plurality of compressed states that compresses said raster data; and
a memory for storing said state representations of said raster data.

12. The system of Claim 11, wherein said analysis mechanism further comprises as said predetermined set of parameters a contrast of said raster data determined within each of said groups.

13. The system of Claim 11, wherein said analysis mechanism further comprises as said predetermined set of parameters a determination of the existence of lines, edges or graphically generated objects at least partially contained within said groups.

14. The system of Claim 11, wherein said analysis mechanism further comprises a simultaneous analysis for adjacent of said groups from multiple scan lines.

15. The system of Claim 14, wherein said analysis mechanism further comprises an analysis of opacity for adjacent of said group from multiple scan lines.

16. The system of Claim 11, wherein said assignment routine further comprises determining a run length of said states.

17. The system of Claim 16, wherein said assignment routine further comprises said run length being determined by a series of successive equalities of a numerical value for each of said groups.

18. The system of Claim 17, wherein said assignment routine further comprises a determining mechanism to identify if said series of said numerical values are equal on individual scan lines.

19. The system of Claim 17, wherein said assignment routine further comprises a determining mechanism to identify if said series of said numerical values are equal on multiple scan lines.

20. The system of Claim 11, wherein said assignment routine further comprises at least one of said states having a predetermined compression ratio.

21. A run length compression method for pictorial data with a transparency mask comprising the steps of:
processing pictorial data into a plurality of groups, wherein each of said groups is given a numerical value;
analyzing said groups for a predetermined set of parameters; and
assigning compression states to said groups in accordance with transparency of said groups, constancy of said numerical values of one of said groups with another of said groups, or a feature within said groups that should not be lost to compression.

22. The method of Claim 21, wherein the step of analyzing further comprises analyzing adjacent groups.

23. The method of Claim 22, wherein the step of assigning further comprises assigning compression states for said groups based on constancy of said numerical values for adjacent of said groups.

24. The method of Claim 23, wherein the step of processing pictorial data further comprises processing raster image data, the step of analyzing further comprises analyzing multiple scan lines of raster data and the step of assigning further comprises as adjacent of said groups being from multiple scan lines.
